# EUROPEAN PATENT SPECIFICATION

(11) **EP 4 130 978 B1**
(45) Date of publication and mention of the grant of the patent: **23.04.2025**
(21) Application number: 22196528.8
(22) Date of filing: 30.06.2014
(51) Int. Cl.: G06F 8/38, G06T 13/00

(54) **SYSTEM AND METHOD FOR STREAMLINING USER INTERFACE DEVELOPMENT**
SYSTEM UND VERFAHREN ZUR RATIONALISIERUNG DER BENUTZERSCHNITTSTELLENENTWICKLUNG
SYSTÈME ET PROCÉDÉ DE RATIONALISATION DU DÉVELOPPEMENT D'UNE INTERFACE UTILISATEUR

(30) Priority: 02.07.2013 US 201313933351
(43) Date of publication of application: 08.02.2023
(62) Divisional of application: 14819710.6
(73) Proprietor: WarnerMedia Direct, LLC, New York, NY 10001 (US)
(72) Inventor: Emmons, Andrew T., Ottawa, K2E 5R9 (CA)
(74) Representative: Houghton, Mark Phillip

(56) References cited:
- WO-A1-01/95102
- US-A1- 2012 174 000
- US-A1- 2013 127 875

## Description

### FIELD OF THE INVENTION

The present invention relates generally to user interface development. The present invention further relates to solutions for aiding in the development of natural user interfaces (NUI).

### BACKGROUND OF THE INVENTION

A user interface (UI) generally refers to a mechanism that facilitates interaction between a human and a machine. A UI may also be called a human-machine interface or a human-computer interface in various contexts.

A UI may be provided to allow users to interact with and control software programs, including, for example, operating system software and various application software (e.g., office suites, media players, graphics editors, games, etc.). Similarly, a user interface may also be provided to allow users to interact with and control web applications presented by way of web pages displayed in web browsers. A user interface may also be provided to allow users to interact with and control a variety of electronic devices. For example, electronic devices such as cameras, DVD players, music players, set-top boxes, mobile devices, and so on all have UI components. A user interface may also be integrated with various machines and devices such as, for example, vehicles (on dashboards), elevators, security alarm systems, and so on.

A UI may include textual elements and graphical elements. A UI may include active elements that receive user input (e.g., buttons, controls, scroll bars, etc.) or provide user output, and passive elements that serve to frame content/information and to provide sensory cues to users (e.g., visual or audio cues). Many Uls include a combination of such elements.

A user interface may be adapted to receive user input by way of signals from input devices (e.g., a keyboard, a mouse, or a touch screen), voice recognition, gestures, or the like.

More broadly speaking, user experience (UX) refers to a person's perceptions and responses that result from the use or anticipated use of a product, system or service. UI elements are designed in part around user workflows driven when a user interacts with system features that are part of the overall UX.

There is significant demand for Uls that are developed based on "natural user interface" principles. Natural user interface is the common parlance used by designers and developers of human-machine interfaces (or human-computer interfaces) to refer to a user interface that is (1) effectively invisible, or becomes invisible with successive learned interactions, to its users, and (2) is based on "natural" elements. "Natural" in this context means that the elements need not be learned, or require less learning, as they mimic known or already learned processes. The natural elements are contrasted for example with the artificial user elements used for example in control interfaces that are not created based on natural user interface principles.

Designing and implementing UI components, and more broadly UX elements, however, is generally quite time consuming and expensive.

Generally speaking, NUI elements are created using processes involving both designers and programmers. Designers use such tools as AFTER EFFECTS^{™} to compose the look and feel of a UI or UX., i.e., to define a design intent.

Software developers then attempt to develop assets (e.g., comprising logic/function) that implement the intention of the designers, but many times key elements intended by the designers are lost in translation. As a result, assets are generally sent back to the designers and they identify elements that require changes. This results in back and forth and contributes generally to an iterative and time consuming process. Furthermore, UI development requires iteration generally, and this is time consuming and expensive to do using prior art solutions.

Therefore, there is a need for systems and methods that address at least some of these limitations. US 2012/174000 discloses a graphical user interface screen design, generating, based on the data representative of the graphical user interface screen design, abstraction data representative of the graphical user interface screen design and computing code configured to be processed by target computing devices having different computing platforms to render graphical user interface screens in accordance with the graphical user interface screen design. US2012/206647 discloses a method to tag/identify content in the form of streaming video and other media. The tags are applied by location and time coordinates corresponding to the content of the streaming video.

### SUMMARY OF THE INVENTION

A computer network implemented system is provided that provides a development platform for streamlining the creation of a graphical user interface having natural user interface (NUI) attributes (the "platform"). The platform is based on a novel and innovative development framework and workflow that enables the creation of executable GUI elements. The invention is defined by the appended claims.

In an aspect of the invention, there is provided a system for facilitating collaborative user interface (UI) development. The system includes: a network; a first computing device providing a collaborative UI development platform; a second computing device and a third computing device, each in communication with the collaborative UI development platform by way of the network. The collaborative UI development platform is adapted to facilitate: generation of a plurality of data structures by a designer operating the second computing device to define design intent for a particular UI comprising a plurality of UI elements, each one of the plurality of data structures associated with one of the plurality of UI elements; and generation of source code in association with at least one of the plurality of data structures by a developer operating the third computing device, the source code comprising logic implementing the design intent.

The collaborative UI development platform may include a rendering component adapted to render the plurality of UI elements. Each one of the plurality of data structures may include data allowing the UI element associated with that data structure to be rendered by the rendering component. This data may include data reflective of state to state transitions for that UI element. The collaborative UI development platform may be adapted to provide a graphical user interface that allows the designer to encode the state to state transitions. The rendering component may be adapted to process the data reflective of state to state transitions to provide an executable UI element.

Each one of the plurality of data structures may include data reflective of characteristics of the UI element associated with that data structure. The collaborative UI development platform may provide a graphical user interface that allows the characteristics to be modified. The characteristics may include at least one of a location of the element, an appearance of the element, an image associated with the element, and an animation associated with the element.

The collaborative UI development platform may include an import component adapted to receive and store video content for the particular user interface from a separate graphics platform.

The collaborative UI development platform may include a plug-in for integrating at least a part of the collaborative UI development platform into a separate graphics platform.

The collaborative UI development platform may be adapted to receive data reflective of the design intent from the second computing device. The collaborative UI development platform may include a decomposition component adapted to process the data reflective of the design intent to automatically identify the plurality of UI elements. The decomposition component may be further adapted to identify a type of each one of the plurality of UI elements. Identifying the type may include identifying one of the plurality of UI elements as a presentation element or a behavioural element.

The collaborative UI development may be adapted to processes the plurality of data structures to generate at least part of the source code.

The particular UI may include characteristics of a natural user interface.

In another aspect of the present invention, there is provided a method of facilitating collaborative user interface (UI) development. The method includes: presenting a first user interface to a designer operating a first computing device; responsive to input from the designer, received from the first computing device, generating a plurality of data structures that define design intent for a particular UI comprising a plurality of UI elements, each one of the plurality of data structures associated with one of the plurality of UI elements; presenting a second user interface to a developer operating a second computing device; and responsive to input from the developer, received from the second computing device, generating source code in association with at least one of the plurality of data structures, the source code comprising logic implementing the design intent.

The input received from the designer may include data reflective of state to state transitions for at least one UI element of the plurality of UI elements.

The method may further include rendering the at least one UI element by processing the data reflective of state to state transitions.

In this respect, before explaining at least one embodiment of the invention in detail, it is to be understood that the invention is not limited in its application to the details of construction and to the arrangements of the components set forth in the following description or the examples provided therein, or illustrated in the drawings. The invention is capable of other embodiments and of being practiced and carried out in various ways. Also, it is to be understood that the phraseology and terminology employed herein are for the purpose of description and should not be regarded as limiting.

### BRIEF DESCRIPTION OF THE DRAWINGS

In the drawings, embodiments of the invention are illustrated by way of example. It is to be expressly understood that the description and drawings are only for the purpose of illustration and as an aid to understanding, and are not intended as a definition of the limits of the invention.
FIG. 1 is a network diagram illustrating a communication network interconnecting a development platform server with a developer computing device and a designer computing device, in accordance with one example implementation of the system;
FIG. 2 is a schematic diagram of the development platform server of FIG. 1;
FIG. 3 is a high level block diagram of a development platform provided by the server of FIG. 1;
FIG. 4 is a high level workflow diagram illustrating a workflow representing an example of the computer implemented method of the present invention;
FIG. 5 is a system resource diagram illustrating at a high level a possible implementation of the system of the present invention;
FIG. 6 is a system resource diagram illustrating resources of the rendering system;
FIG. 7 illustrates the process of importation of files to the platform of the present invention;
FIG. 8 illustrates the tree structure presented by the platform of the present invention;
FIG. 9A, 9B, 9C, 9D, 9E, and 9F illustrate aspects of the development workflow of the present invention, while illustrating representative screens presented by the platform; and
FIG. 10A, 10B, and 10C illustrate example user interfaces created using the platform of the present invention.

### DETAILED DESCRIPTION

A computer network implemented system is provided that provides a development platform for streamlining the creation of graphical user interface having natural user interface (NUI) attributes (the "platform"). The platform is based on a novel and innovative development framework and workflow that enables the creation of UI assets.

The development platform allows designers and developers to collaborate to create GUI assets in a novel and innovative manner. The development platform manages and provides a collaborative user interface development environment. The overall workflow is streamlined thereby allowing new collaborative methods and ways of working, including for example making modifications to a user interface development quickly or possibly in real time upon receipt of feedback from a designer, allowing tighter and more efficient working relationships between collaborators. The platform also allows larger teams to work together more effectively by providing a consistent way of completing work elements, allowing multiple individuals to pick up project tasks, with minimal effort required for a new person to a project to get up to speed.

The development platform automates steps previously performed by a developer or a designer, thereby improving development efficiency and reducing costs.

The development platform also facilitates parallel completion of some tasks by designers and developers, resulting in more efficient collaboration.

The development platform simplifies collaboration between developers and designers. As a result, some steps previously requiring a developer may be executed by a designer, and possibly vice versa.

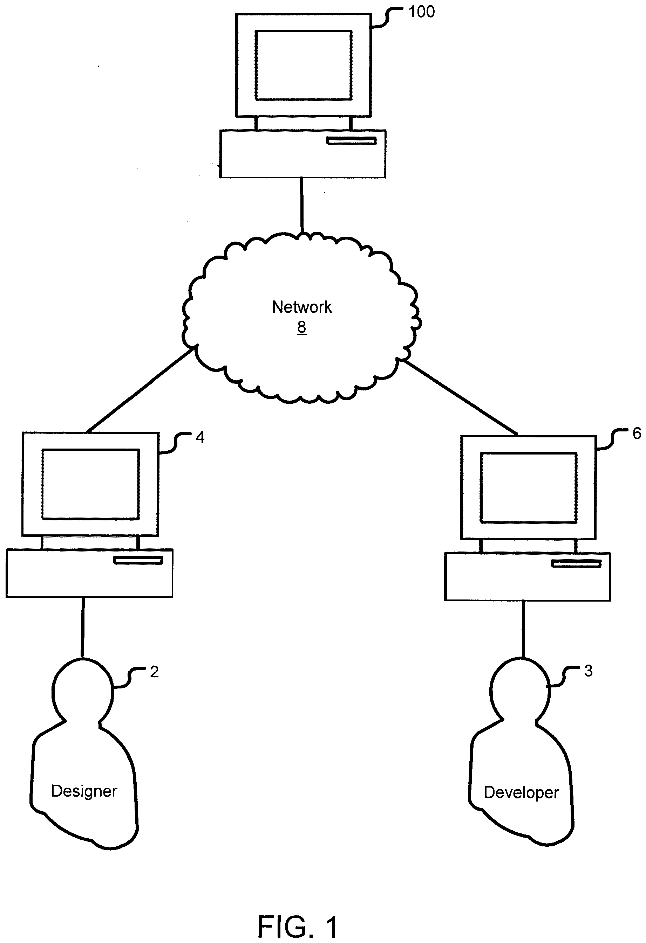

Referring now to FIG. 1, there is depicted a development platform server (100) interconnected with a designer computing device (4) and a developer computing device (6), by way of a communication network (8).

Designer computing device (4) may be operated by one or more designers (2) to access data and services provided by development platform server (100). Similarly, developer computing device (6) may be operated by one or more developers to access data and services provided by development platform server (100).

Designer computing device (4) and developer computing device (6) may each be a conventional network-interconnected computing device. As such, the architecture of designer computing device (4) and developer computing device (6) is not specifically illustrated. Each of designer computing devices (4) and developer computing device (6) may include a processor, network interface, display, and memory, and may be a desktop personal computer, a laptop computing device, a network computing device, a tablet computing device, a personal digital assistance, a mobile phone, or the like.

Although only one designer computing device (4) and only one developer computing device (6) are shown for clarity, there may be multiple designer computing devices (4) and multiple developer computing devices (6) interconnected with development platform server (100) by network (8), allowing a team or teams of designers and developers to access data and services provided by server (100). These designer computing devices (4) and developer computing devices (6) may be distributed over a wide geographic area.

Network (8) may be any network capable of carrying data including the Internet, Ethernet, plain old telephone service (POTS) line, public switch telephone network (PSTN), integrated services digital network (ISDN), digital subscriber line (DSL), coaxial cable, fiber optics, satellite, mobile, wireless (e.g. Wi-Fi, WiMAX), SS7 signaling network, fixed line, local area network, wide area network, and others, including any combination of these.

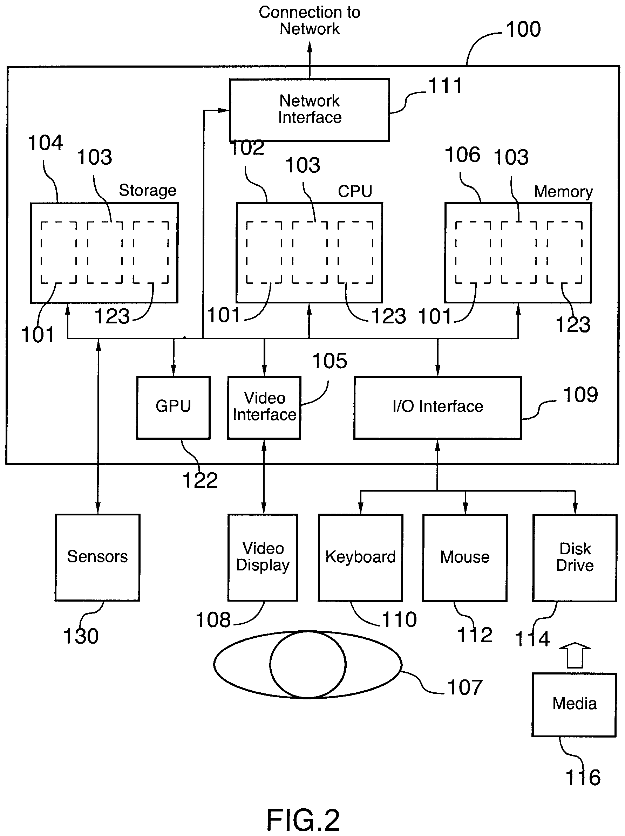

FIG. 2 schematically illustrates development platform server (100), in accordance with one example embodiment of the present invention. As shown, server (100) may include at least one central processing unit ("CPU") (102) connected to a storage unit (104) and to memory (106).

CPU (102) may be any type of processor, such as, for example, any type of general-purpose microprocessor or microcontroller (e.g., an Intel^{™} x86, PowerPC^{™}, ARM^{™} processor, or the like), a digital signal processing (DSP) processor, an integrated circuit, a programmable read-only memory (PROM), or any combination thereof.

Storage unit (104) may include one or more storage devices such as a hard disk, solid-state disk, or the like. Storage unit (104) may also be partly or wholly cloud-based, accessible via a network such as network (8).

Memory (106) may include a suitable combination of any type of computer memory that is located either internally or externally such as, for example, random-access memory (RAM), read-only memory (ROM), compact disc read-only memory (CDROM), electro-optical memory, magneto-optical memory, erasable programmable read-only memory (EPROM), and electrically-erasable programmable read-only memory (EEPROM), or the like.

The CPU (102) may process an operating system (101), application program (103), and data (123). The operating system (101), UI development software (103), and data (123) may be stored in storage unit (104) and loaded into memory (106), as may be required. Operating software (101) may, for example, be a Microsoft Windows^{™}, Unix^{™}, Linux^{™}, OSX^{™} operating system or the like.

UI development software (103) and data (123), when processed at CPU (102), provide the functionality of the development platform described herein, as further detailed below. UI development software (103) may be implemented in a high level procedural or object oriented programming or scripting language, or both. However, alternatively software (103) may be implemented in assembly or machine language, if desired. The language may be a compiled or interpreted language.

Server (100) may further include a graphics processing unit (GPU) 122 which is operatively connected to CPU (102) and to memory (106) to offload intensive image processing calculations from CPU (102) and run these calculations in parallel with CPU (102).

An operator (107) may interact with server (100) using a video display (108) connected by a video interface (105), and various input/output devices such as a keyboard (110), mouse (112), and disk drive (114) connected by an I/O interface (109). In known manners, mouse (112) may be configured to control movement of a cursor in video display (108), and to operate various graphical user interface (GUI) controls appearing in the video display (108) with a mouse button. Disk drive (114) may be configured to accept computer readable media (116).

Server (100) may connect to one or more networks such as network (8) via network interface (111). Network interface (111) allows server (100) to communicate by way of wired or wireless communications with other computing devices such as designer computing devices (4) and developer computing devices (6).

Server (100) may be embodied in various form factors including one or more desktop and laptop computers, and wireless mobile computer devices such as tablets, smart phones and super phones. It will be appreciated that the present description does not limit the size or form factor of the computing device on which the present system and method may be embodied.

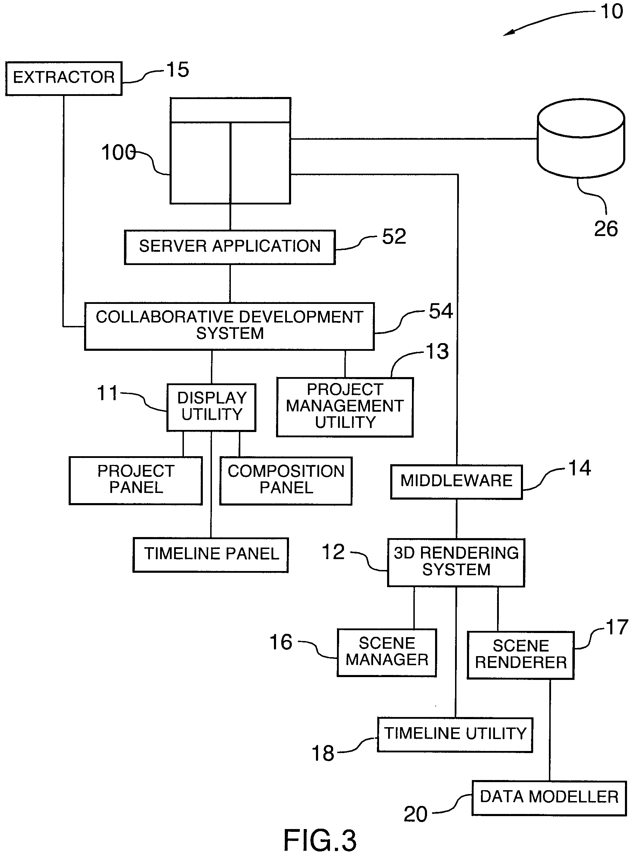

FIG. 3 illustrates a development platform (10) provided by server (100), in accordance with an example embodiment of the present invention. As shown, server (100) is linked to a server application (52) that includes a collaborative development system (54), which may be implemented as an application repository. The collaborative development system (54) includes a display utility (11) and a project management utility (13). In one aspect, display utility (11) presents a series of screens made accessible to platform users to access the functions and features described herein. In one aspect, project management utility (13) may incorporate standard features for creating and managing UI development related projects.

In one implementation, collaborative development system (54) also integrates the resources of a 3D rendering system (12), which may be implemented as a middleware resource as shown in FIG. 1. The 3D rendering system (12) is programmed to display and animate UI elements. The rendering system (12) renders UI elements using the assets in a way that related effects are accurately rendered. In another aspect, the platform (10) allows rendering to be completed partly or wholly by designer computing device (4) or developer computing device (6).

In one implementation, server (100) provides online access to the functions of the 3D rendering system (12) in order to enable access to platform users to UI assets developed using the collaborative development system (54). Such users may, for example, include designers (2) or developers (3) accessing platform (10) by way of network (8).

The display utility (11) may present a project panel (to access features of the project management utility (13)), a composition panel, and a timeline panel. The project panel acts as a bin to import stills, video, and audio footage items. Footage items from the project panel are used in the timeline panel, where layer order and timing can be adjusted. The items visible at the current time marker are displayed in the composition panel, which is used to add transitions and other effects. Panels may be presented to either designer computing device (4) or developer computing device (6).

The composition panel allows a designer to capture the various elements and information indicative of their intent relative to the UI design, to enable creation of a series of UI assets that are encoded with sufficient information to enable their rendering with significantly reduced development effort than in prior art solutions. In one aspect, the assets referred to herein incorporate coding elements corresponding to relevant effects such as position, animation, and "look". The elements together represent the design intent that is important to convey the important elements for accurately rendering a NUI. More specifically, the platform (10) is designed to encode the assets with state to state transitions such that the assets themselves can be manipulated (to change order and make modifications for example), and yet these assets are also executable, e.g., to exhibit encoded behavior and presentation.

In one aspect, a designer uses an existing motion graphics / visual graphics platform (11) ("visual graphics platform"), such as AE, and the output from the visual graphic platform is imported to the platform (10) of the present invention. Importing may include transmitting the data to the platform (10) by way of network (8). The output generally consists of video content that shows UI elements organized in an animated workflow that illustrates interaction with the UI elements.

In one aspect, the 3D rendering system (12) includes: (A) a scene manager (16), (B) a scene renderer (17), and (C) a timeline utility (18).

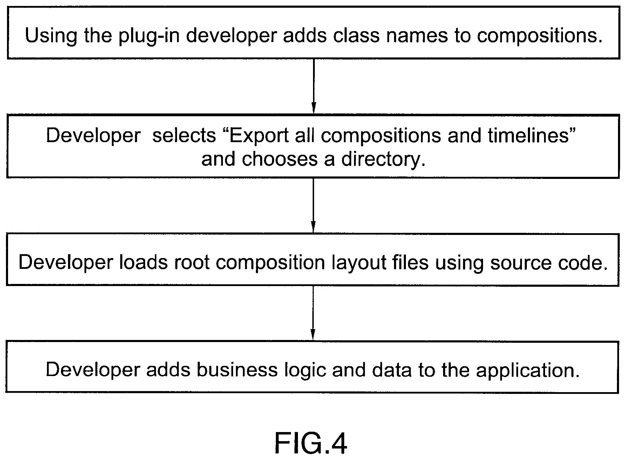

A representative implementation of the invention is shown in FIG. 4 as a possible workflow for practicing the invention. (A) A platform user who is a designer creates a UI layout and associated animations for example using AE or a similar platform. (B) A platform user who is a developer loads an AE project file into AE, wherein AE includes a plug-in in accordance with the present invention. (C) Using the plug-in the platform user who is a developer adds class names to compositions, based on the present invention. (D) The platform user who is a developer optionally selects "Export all compositions and timelines" or equivalent from the plug-in and chooses a directory. (D) The platform user who is a developer loads root composition layout files using source code. (E) The platform user who is a developer adds business logic and data to the application. As noted, a platform user who is a designer may access the platform (10) by operating designer computing device (4). Similarly, a platform user who is a developer may access the platform (10) by operating developer computing device (6).

In another aspect, a computer implemented method is provided for designing and implementing a series of UI elements in a streamlined way. One implementation of the method consists of: (A) decomposing a UI design into a series of UI components (usually UI designer); (B) creating UI controls for the UI design, using a design tool or composition tool (usually UI designer); (C) add behavior class names for each behavior control (usually UI designer); (D) export UI controls to an asset file (usually UI designer); (E) import UI controls into source code (UI designer or UI developer); (F) access or generate specific code to handle business logic (for example what happens when a specific button is pushed) (usually UI developer); (G) Export UI controls to asset files (UI Developer); (H) import UI controls into source code (UI Developer); and (I) write or import specific code to handle business logic - e.g. what happens when a button is pushed (UI Developer).

If necessary, an additional step consists of iterating the UI controls using the design tool.

A "UI control" is an element of a GUI that displays an information arrangement changeable by the user, such as a window or a text box. UI controls can have both presentation and behavior.

The input to the platform (10) may consist of output files from a number of systems such as: (A) graphics files such as PNG or JPEG; (B) scene trees such as those generated by such platforms as AFTER EFFECTS^{™} (AE) of Adobe; or in the case of the embodiment of the present invention, (C) animation files generated by AE or FLASH^{™}.

In one aspect, platform (10) handles both time-based animation files and frame-based animation files.

In one aspect, the platform (10) receives as input files from a motion graphics /visual effects platform such as AE. AE is used to develop sophisticated videos using a large number of effects and a 3D stage. Adobe publishes an API which allows developers to extract information within the content. There are many commercial graphical design tools which help designers create 3D content in this way such as Maya^{™}, 3D Studio^{™}, Blender^{™}, etc. , and the present invention may interoperate with such platforms as well.

The platform (10) includes an extractor (15) that analyzes the output files. The computer system provides a number of tools that allows platform users to add class names to as to identify components that are UI controls.

The extractor (15) analyzes, and identifies, components that constitute UI controls. In addition, in one aspect, the platform (10) categorizes UI controls into "presentation" related UI controls and "behavior related" UI controls. UI controls can have both presentation and behavior.

The separate treatment of presentation and behavior, allows the treatment of presentation as part of asset files. The extractor (15) is operable to differentiate between presentation related attributes and behavior related attributes, and generate UI assets based on the input in a way that attributes are encoded based on their type, i.e. whether they are presentation or behavior related. This aspect allows the UI assets to be manipulated as required by the designer, and also for UI assets to encode the designer's intent for aspects of the computer system operations managed by developer users.

The presentation may consist of: (A) location (position, scale, rotation), (B) opacity (how translucent it is), (C) bitmaps (the graphics to display the control), (D) visual effects (lighting, shadows, blur), and (D) animations (how parts of the control move in response to events). The behavior consists of: states of the control (pushed up, pushed down, scrolling, etc) information on how to transition from one state to another. The presentation of a UI control is developed in a commercial tool that UI designers know how to use, and then exported as asset files.

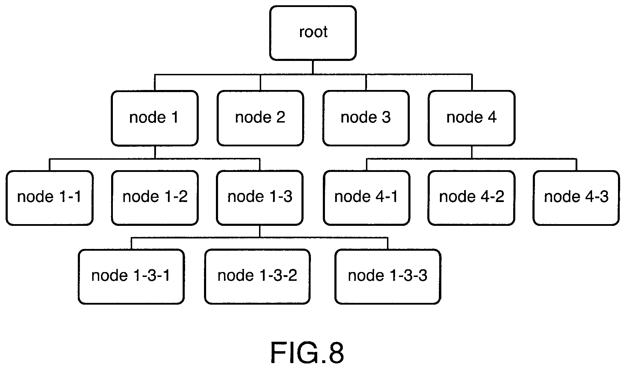

This workflow is for UI controls that are described in 3D space, using a 3D coordinate system and a camera which determines how they are rendered on the screen. These controls are described visually using a tree structure, where each node in the tree can be a graphical element to display, as shown in FIG. 8. This graphical element can be a single quad of triangles, or a large mesh of many thousands of triangles. The behavior may be defined in C++ classes within the platform (10), by instantiating appropriate classes for the UI control when the asset file is loaded.

Even though presentation and behavior are separated, they need to communicate with each other. For example, at some point a change in the behavior may trigger a particular visual effect, and so this effect has to be communicated to the behavior code. There are a number of ways that the presentation content can communicate to the behavior code, for example specific presentation related names can be used to name each element. These names can then be used in behavior code to identify a particular element. Markers are added to timelines thereby indicating for example for an animation, a start, end and name for a particular portion of an animation. The behavior code then uses this to extract a specific animation based on a name.

Assigning a class name to a control - each UI control can have a string associated with it which indicates the C++ class that will be instantiated when the asset file is loaded. This is the mechanism used to bind the presentation to behavior.

A single UI control can export two files - a layout file and a timeline file. The layout files describe the attributes of each node in the control such as position, rotation, anchor point, scale, orientation opacity source - either a bitmap file, a solid color, or another UI control.

If the source is another UI Control, the export process becomes recursive and writes files for each embedded control. During this process, animation information is saved within a separate timeline file. The animation information contains data needed to change attributes of nodes within the control over time.

### Importing Presentation Data

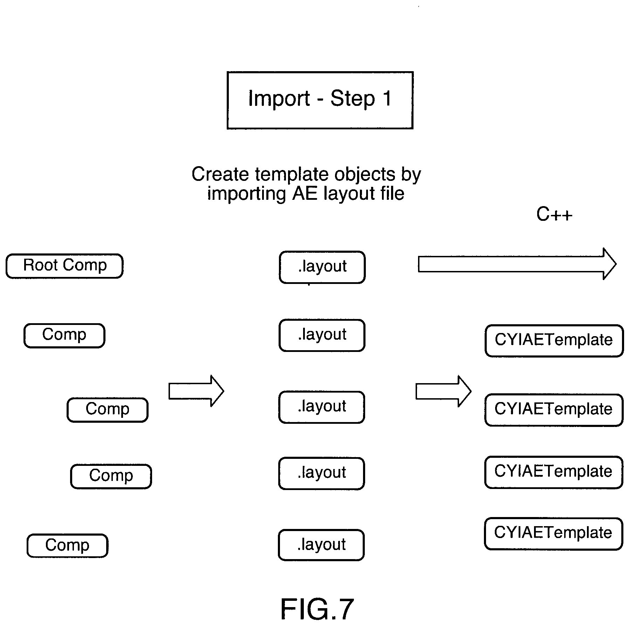

FIG. 7 illustrates the process of importation of files to the platform (10).

Importing layout files results in creating C++ classes that both render to the screen and provide UI behavior. Rendering is achieved by using a 3D scene graph data model, which allows the user interface to be hardware accelerated by a GPU. Behavior is achieved by classes which are derived from a base view class. This base view class is in turn derived from a base scene node, as shown in FIG. 8 for example.

Importing .timeline files results in creating instances of the timeline class. This class stores all information required to animate attributes of the scene tree that was created when importing the .layout file. The timeline markers are used to create named timelines of a given duration that will be started and stopped based on UI behavior and state.

In one aspect, the scene manager (16) allows a user to define a 3D scene for a UI project using a tree structure, wherein each component corresponds to a UI element , and its position in the tree structure is indicative of the UI elements position in 3D space.

FIG. 8 illustrates the operations of the scene manager (16), wherein a tree structure comprising a plurality of nodes that are called scene nodes. The scene manager (16) assists platform users in being able to organize UI scenes and their relationships with one another. The scene manager (16) also is configured to enable transformations of scenes through the UI that it presents. For example application of a transform to a specific node applies the same transformation to all of its child nodes, if any.

The scene renderer (17) includes a data modeller (20) to drive the rendering of UI elements.

Significantly, the scene nodes contain not only their position data, but other data related to rendering such as for example vertex, mesh and material data, thereby enabling the scene renderer (17) to render on a node by node basis if this is requested by a user.

The scene renderer (17), in one implementation, is programmed to render 3D graphics on a wide range of rendering APIs such as OpenGL ES 2.0, DirectX, PS3, etc.. In one implementation, the scene renderer (17) requests a display list from the scene manager (16). The display list can consist of an optimized data stream that compiles information for each scene node.

In one implementation, the scene renderer (17) uses abstract constructs for rendering one or more UI graphical objects, including meshes, materials, and uniform buffers. Significantly, these graphical objects represent sufficient information for rendering as 3D objects. The UI graphical objects are not however a concrete implementation; these using the sub-classes explained below. This way, however, the platform users can interact with 3D content without the need to use underlying rendering APIs that would be required in order to execute to a graphics processing unit ("GPU").

The design of the scene renderer (17) allows a user to generate generic 3D drawings and a range of effects. This allows a designer to compose UI elements, review and make changes to UI elements. In effect, this allows a designer to advance the development of UI and UX elements, without the need to wait for work product from programmers. This speeds up the development process and saves resources. It also allows designers to engage in a development process that is more natural and therefore allows designers to be more creative by following inspiration and testing particular design ideas. The disintermediation of the design process that is involved in prior art solutions, where the workflow is divided between designers and programmers is far less advantageous than the present invention. A key insight of the present invention is the particular level of rendering capability provided, and the UI design features that are associated with the rendering capability.

### Timeline Utility

The timeline utility (18) is used to animate scene nodes (transform, opacity) and their contents (vertices, shader variables, etc). The timeline utility (18) provides a list of "tracks", where each track corresponds to one attribute for animation. Each track also contains any number of key times, which are used to identify at what point a value changes to a new value. The key times can also be expressed as Bezier curves which indicate how the values change over time.

In one aspect the rendering system workflow consists of: (A) current time is evaluated and updated; (B) user input is received and handled; (C) timelines are updated with a new time; (D) this results in an update to affected scene nodes and their content; (E) the scene manager is processed; (F) any dirty scene nodes re-calculate their composite world matrices; (G) a draw list is rendered; and (H) the draw list is destroyed.

In one aspect of the present invention, the rendering system (22) of the present invention can be implemented over a middleware layer (24), as shown in FIG. 3. The computer system also includes one or more libraries (26). The libraries (26) may include for example templates for different UI development projects. The libraries (26) may also include routines for items such as image decoding, text glyph rendering, etc.

A template may include a look for a view, or layout. The layout may contain one or more scene nodes that together define the graphical elements for a view. A template can also define the animations for a view for example how items move and relate together when responding to specific states.

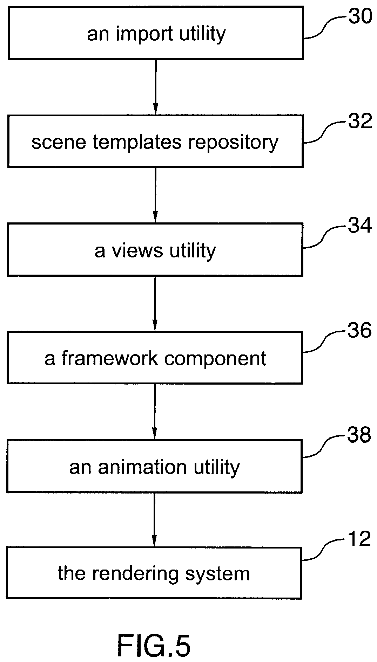

As shown in FIG. 5, the platform (10) may include: (A) an import utility (30); (B) scene templates (32) repository; (C) a views utility (34); (D) a framework component (36); (E) an animation utility (38); and (F) the rendering system (12).

In one aspect, the framework component (36) acts as connector or communication layer between the various components in order to enable the workflows described.

The import utility (30) extracts information from one or more tools and makes the information available to the other components. The views utility (34) may include common UI behaviors, for example ListView, PushButtonView, etc

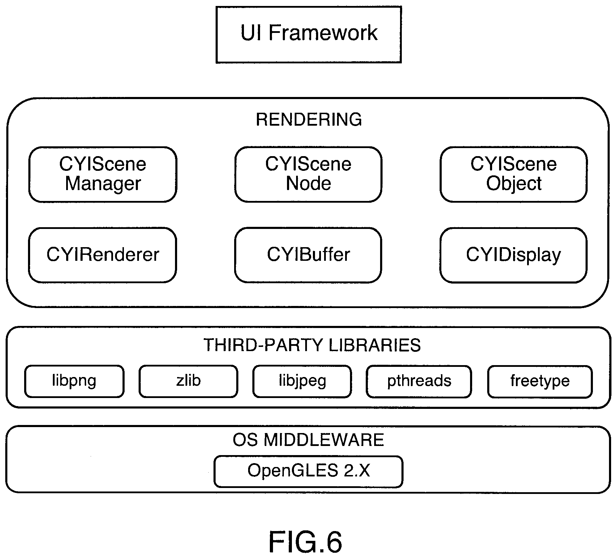

A representative implementation of the rendering system (12) may be implemented with the components shown in FIG. 6. These may include: (A) a component referred to as a CYIDisplay, which is a display component, which abstracts access to the OpenGL hardware; (B) a component referred to as the CYIBuffer, which contains bitmap data and blitting routines for both hardware and software buffers; (C) a component referred to as a CYIRenderer, which contains a list of scene node data, renders using OpenGL; (D) a component referred to as the CYISceneNode, which contains a building block of graphics sub-components, and provides a scene tree that includes positional information (this is no the component where drawing occurs); (E) a component referred to as the CYISceneObject, which is what the user draws; and finally (F) a component referred to as the CYISceneManager, which returns a render list of scene nodes and provides scene node data to the renderer.

### Example In Operation

In one possible implementation, the platform (10) uses After Effects^{™} from Adobe. What follows is an example of the operation of the platform (10), working with After Effects ("AE"). A UI design tool such as AE can communicate with the server application (52) shown in FIG. 3. Alternatively, a plug-in may be provided (not shown) which incorporates aspects of the features described into a UI design tool such as AE. Alternatively, UI design features such as those available through AE, as an example, may be implemented to the server application (52). What follows is an example of the implementation of the present invention, wherein features of a UI design tool such as AE are enhanced using a plug-in, including by optionally leveraging the resources of the server (100) that includes collaborative development features that enhance the UI development functions.

AE files consist of nested compositions. Each composition can have layers and/or other compositions. The platform (10) may include a plug-in that extracts files from AE, and specifically layout files for each composition from AE. The layout files extracted from AE may include: (A) a list of layers used in the composition, the layers containing 3D positional data such as position, rotation, anchor point, scale, orientation; and (B) a list of sources used in the composition, which may include bitmaps, NULL objects, solid colors, or compositions.

A platform user can name a composition. Class names are assigned fro the purposes of the scene view. The various elements for the composition are defined. Width/height for the scene may be selected using 2D coordinates. The plug-in exports timeline related information from AE (although AE does not contain a timeline concept similar to that used by the platform.

The user selects values for multiple tracks for each element. Each track an element's property - such as position rotation.

For each track, key time information is obtained. This includes for example what a particular value was at a given time, i.e. that at time X track Y had Z value. Rate of change can be determined using for example Bezier control points.

Marker information is obtained from AE that represents logical or functional elements. For example, one marker may indicate 'pushdown', another 'pushup'. These have a start time and duration and allow the platform (10) to automatically bind behavior state to the animation. For example, if the composition class name is 'CYIPushButtonView', and the timeline contained a marker for 'ondown', then that part of the timeline would be used when the user pushes down on the button

The platform aligns automatically the various elements with the timeline automatically.

In one implementation, the platform loads the layout file for the root composition and automatically loads other layout files for any embedded compositions. These other layout files are created as CYIAETemplate instances and stored in the asset manager. Timeline files are automatically loaded as well, one per composition. The timeline data is stored in the CYIETTemplate instance.

As the file loading continues, a scene tree of CYISceneView (or derived) instances are created, complete with timeline animation data, from the CYIAETemplates.

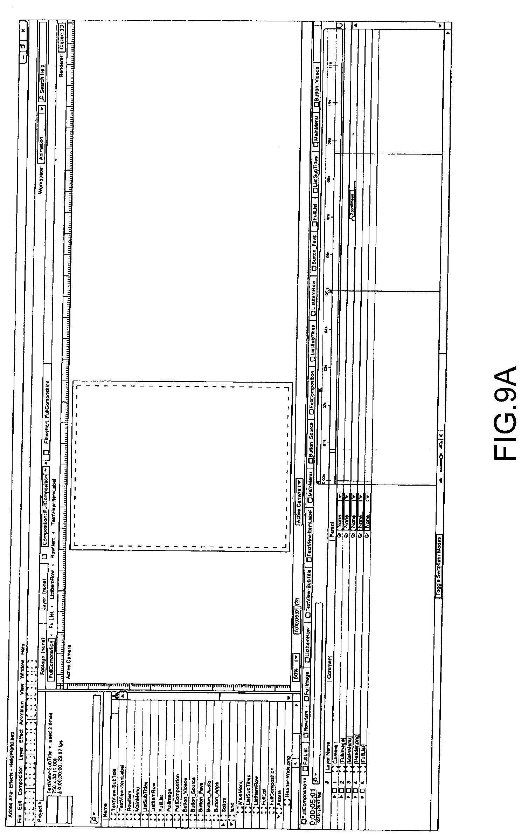

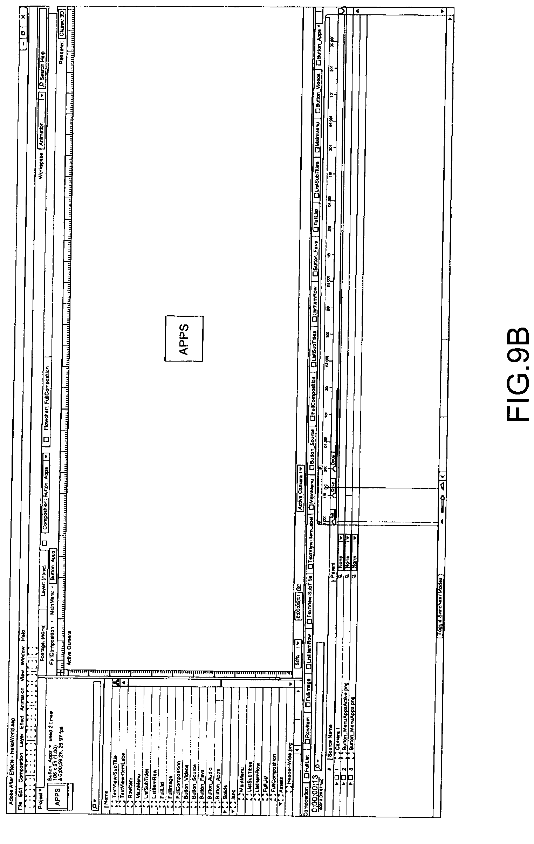

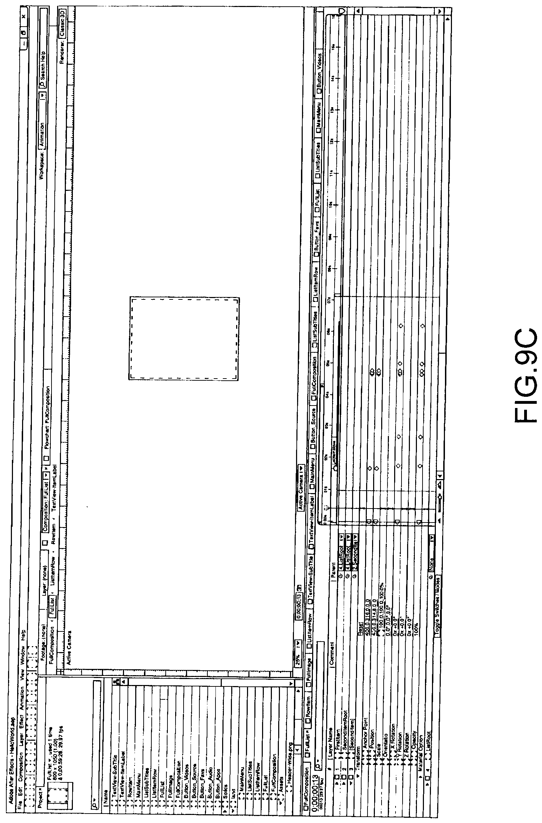

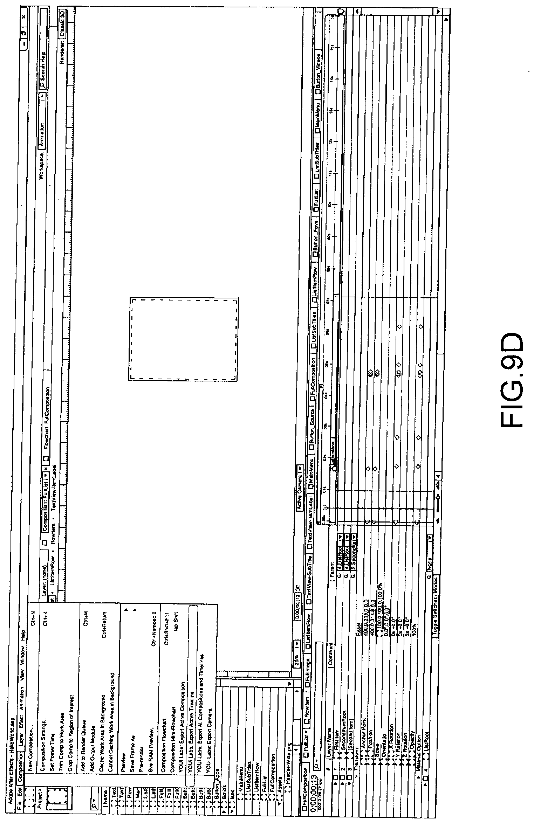

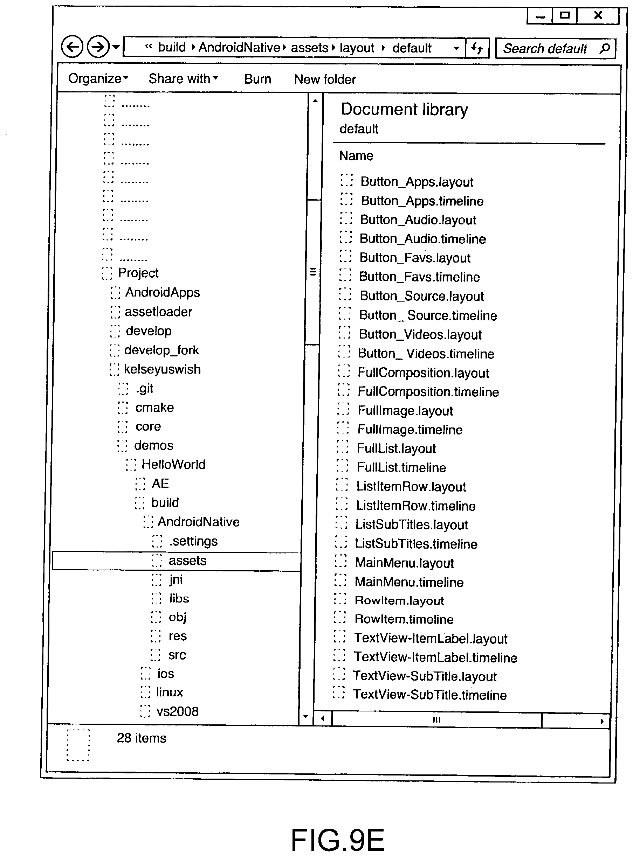

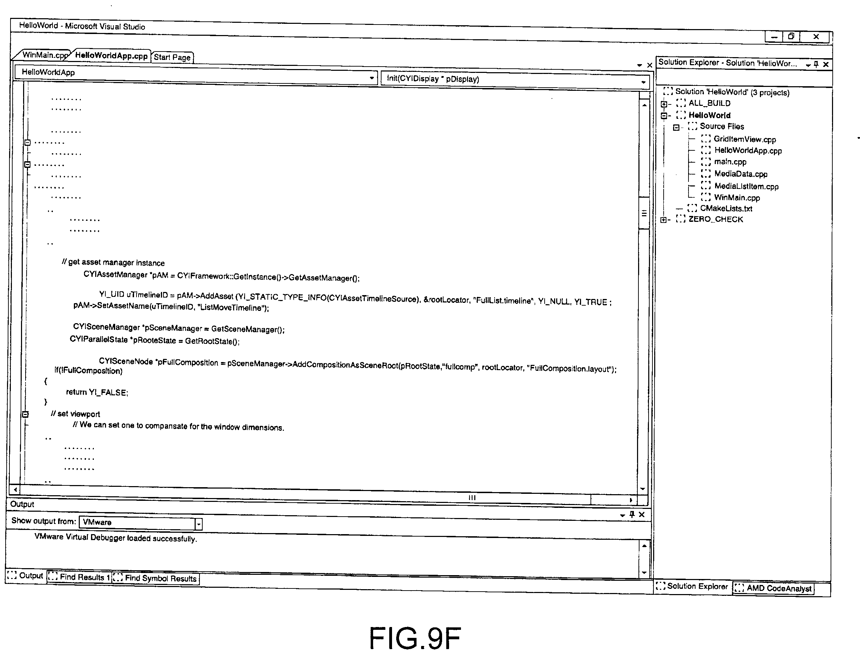

FIGS. 9A, 9B, 9C, 9D, 9E, and 9F illustrate the operation of the present invention by referring to a series of representative screenshot views of the platform of the present invention, in one representative implementation of the present invention. In the implementations of the invention shown in FIGS. 9A-9F, in order to illustrate the operation of the present invention, access to features of the platform (10) are shown as enhancements to AE.

FIG. 9A shows a screen displayed by the platform (10) that a UI designer user would use to create a UI layout using for example animations from AE. The UI designer can define the position of UI items, how they animate, and how they interact with one another.

FIG. 9B shows that any given UI design is made of multiple components, each component being for example a composition from AE. For example, each button, or list item, in a given UI design is its own composition. The UI developer then adds animations to the components, and puts specific markers on the timelines to give a context to the timeline. For example, they can add 'DownOn, 'UpPn', etc. markers to the timeline for a button.

FIG. 9C illustrates a screen where the UI developer can access various other tools to create complex UI controls in order to generate looks and animations based on the UI content.

FIG. 9D shows a representative screen once a project has been assigned to a software developer. The platform (10) integrates tools and workflows that are used by designers and developers respectively, in a seamless manner. As shown in FIG. 9D, the developer can provide each composition a class name by adding information in.

FIG. 9E shows a representative screen displaying the functions of the plugin. The plugin of the platform (10) allows the developer to write a timeline and a layout file for each composition.

As shown in FIG. 9F, the developer then loads the top-level root composition layout file. This file in turn loads all of the compositions it uses, along with their timeline files. Once loaded, a working UI tree is created that can be rendered with a 3D engine, and can be interacted with by the user. The final step is for the software developer to add business logic - what happens when a button is pushed, what kind of data is used in the list view, etc.

### Example of UI Designs

Platform (10) may be used to create a large variety of human-machine interfaces / human-computer interfaces, including, for example, interfaces for various software programs, web applications, and electronic devices. Such software programs may include office suites, media players, graphics editors, games, to name but a few examples. Such web applications may include social networking applications, video streaming applications, blogs, banking applications, to name but a few examples. Such electronic devices include a wide range of devices such as cameras, DVD players, music players, set-top boxes, mobile devices, and so on. Platform (10) may also be used to create interfaces for machines and facilities, such as vehicles (on dashboards), elevators, exercise equipment, intercoms, and so on.

So, the term "UI" is used broadly herein to encompass all such human-machine interfaces / human-computer interfaces. Similarly, "UI element" refers to any element found in such interfaces, including textual elements, graphical elements, active elements, passive elements, etc. As noted, some elements may serve to frame content/information and/or to provide sensory cues to users (e.g., visual or audio cues).

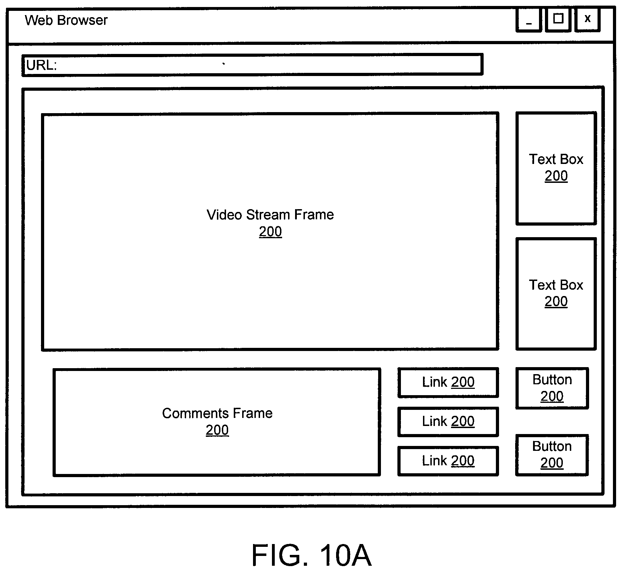

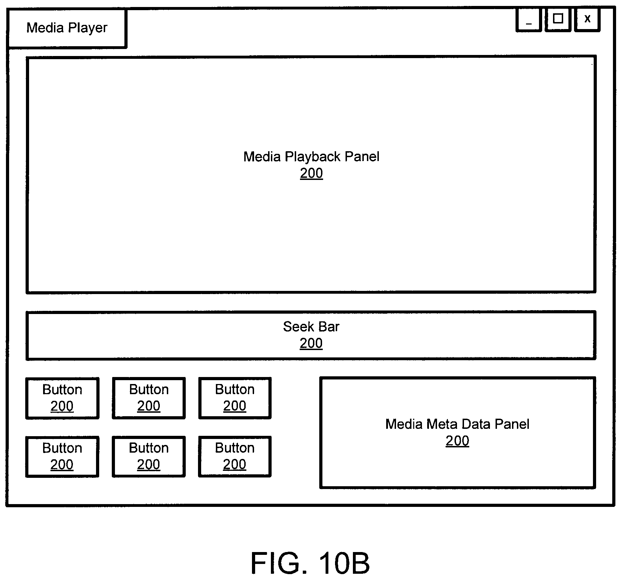

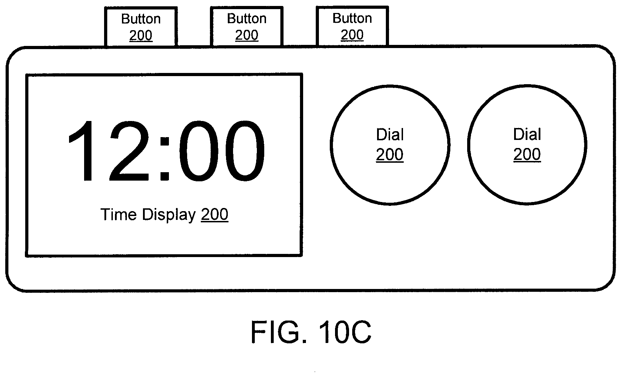

FIG. 10A, 10B, and 10C illustrate a few example Uls that may be created using platform (10). In particular, FIG. 10A illustrates a user interface for a web application that delivers video streaming (e.g., similar to Youtube^{™}, Netflix^{™} or the like). As shown, this user interface includes a variety of UI elements 200, including various frames/boxes for presenting information and data, user operable links and buttons, etc.

FIG. 10B illustrates a user interface for a media player application for media playback (e.g., similar to iTunes^{™}, Windows Media Player^{™}, Winamp^{™} or the like). As shown, this user interface includes a variety of UI elements 200, including various panels and user-operable controls.

FIG. 10C illustrates a user interface for an example electronic device, namely, an alarm clock radio. As shown, this user interface includes various UI elements, including displays and controls. UI elements may correspond to physical components that can be manipulated by a user.

### Advantages

Various advantages of the present invention have been mentioned above. Additional representative advantages are now described.

The collaborative platform of the present invention enables designers and programmers to collaborate on complex UI development projects in an efficient manner.

High value UI assets are created in an efficient manner that respects the need for flexibility and responsiveness to support the creative process of UI design.

Use of the platform provides learning opportunities to developers.

The platform enables rapid prototyping and creation of demonstration UI assets that users can provide feedback on, thereby improving the user engagement levels of UI assets.

UI assets can be swapped out, thus enabling rapid development of UI assets based on different scenarios.

The platform permits the capture of the designer's intent in an efficient manner.

The development platform allows development of UI assets across several operating systems.

The systems and methods of the described embodiments are capable of being distributed, at least partly, in a computer program product including a physical, non-transitory computer readable medium that bears computer usable instructions for one or more processors. The medium may be provided in various forms, including one or more diskettes, compact disks, tapes, chips, magnetic and electronic storage media, volatile memory, non-volatile memory and the like. Non-transitory computer-readable media may include all computer-readable media, with the exception being a transitory, propagating signal. The term non-transitory is not intended to exclude computer readable media such as primary memory, volatile memory, RAM and so on, where the data stored thereon may only be temporarily stored. The computer useable instructions may also be in various forms, including compiled and non-compiled code.

While illustrative embodiments of the invention have been described above, it will be appreciated that various changes and modifications may be made without departing from the scope of the present invention.

In further aspects, the disclosure provides systems, devices, methods, and computer programming products, including non-transient machine-readable instruction sets, for use in implementing such methods and enabling the functionality described previously.

Although the disclosure has been described and illustrated in exemplary forms with a certain degree of particularity, it is noted that the description and illustrations have been made by way of example only. Numerous changes in the details of construction and combination and arrangement of parts and steps may be made. Accordingly, such changes are intended to be included in the invention, the scope of which is defined by the claims.

Except to the extent explicitly stated or inherent within the processes described, including any optional steps or components thereof, no required order, sequence, or combination is intended or implied. As will be will be understood by those skilled in the relevant arts, with respect to both processes and any systems, devices, etc., described herein, a wide range of variations is possible, and even advantageous, in various circumstances, without departing from the scope of the invention, which is to be limited only by the claims.

## Claims

1. A computer-implemented method comprising:
obtaining an output file, the output file including data defining user interface, UI, elements and comprising an animation file;
extracting, from the output file, one or more UI layout files and associated animations, the associated animations defining animation attributes for the UI elements in a state associated with a layout defined by the one or more UI layout files;
encoding by a processor (102), a series of UI assets with state-to state transitions such that the series of UI assets can be manipulated and executed to exhibit encoded behavior and presentation, the encoding performed based on the obtained UI elements, the UI layout files and the associated animations; and
when the output file comprises marker information corresponding with the state associated with the layout, the marker information comprising a start time and a duration to automatically bind a behavior state to the associated animations.

2. The computer-implemented method of claim 1 wherein the output file is obtained from a visual graphics platform (11) and one or more of the UI elements comprise UI controls, the method further comprising:
categorizing the UI controls into presentation-related UI controls and behavior-related UI controls.

3. The computer-implemented method of claim 1 wherein the output file includes data (123) defining the UI elements organized in an animated workflow and illustrating interaction with the UI elements.

4. The computer-implemented method of claim 1 wherein the state-to-state transitions comprise position data or animation data.

5. The computer-implemented method of claim 1 wherein the associated animations are provided in time-based animation files or frame-based animation files.

6. The computer-implemented method of claim 1 wherein the series of executable UI assets are manipulable in connection with a user interface design workflow while being executable by a rendering utility (12).

7. The computer-implemented method of claim 1 further comprising:
generating timeline information based on the obtained UI elements.

8. The computer implemented method of claim 7 wherein generating timeline information is further based on the one or more UI layout files and the associated animations.

9. The computer-implemented method of claim 1 further comprising:
analyzing the output file and identifying components that constitute UI controls; and
separating presentation data for the UI controls from behavior data for the UI controls, the presentation data and the behavior data being obtained from the one or more UI layout files.

10. The computer-implemented method of claim 9 further comprising, for a behavior-related UI control among the UI controls:
adding a behavior class name to the behavior-related UI control to bind the presentation data to the behavior data.

11. The computer-implemented method of claim 9 wherein the series of executable UI assets comprises executable code separating the presentation data from the behavior data such that the behavior of the UI control is unaffected by modification of the presentation data for the UI control.

12. A non-transitory machine-readable medium storing statements and instructions for execution by a processor (102) to perform a computer-implemented method comprising:
obtaining an output file, the output file including data defining user interface ,UI, elements and
comprising an animation file;
extracting, from the output file, one or more UI layout files and associated animations, the associated animations defining animation attributes for the UI elements in a state associated with a layout defined by the one or more UI layout files;
encoding by a processor (102), a series of UI assets with state-to state transitions such that the series of UI assets can be manipulated and executed to exhibit encoded behavior and presentation, the encoding performed based on the obtained UI elements, the UI layout files and the associated animations; and
when the output file comprises marker information corresponding with the state associated with the layout, the marker information comprising a start time and a duration to automatically bind a behavior state to the associated animations based on the marker information.

13. A computer system for streamlined user interface, UI, development, the system comprising:
one or more processors (102), executing one or more computer programs, configured to:
obtain a output file, the output file including data defining user interface, UI, elements and comprising an animation file;
extract, from the output file, one or more UI layout files and associated animations, the associated animations defining animation attributes for the UI elements in a state associated with a layout defined by the one or more UI layout files;
encode, by a processor (102), a series of UI assets with state-to-state transitions such that the series of UI assets can be manipulated and executed to exhibit encoded behavior and presentation, the encoding performed based on the obtained UI elements, the UI layout files and the associated animations; and
when the output file comprises marker information corresponding with the state associated with the layout, the marker information comprising a start time and a duration to automatically bind a behavior state to the animation based on the marker information.

## Patentansprüche

1. Ein computerimplementiertes Verfahren, umfassend:
Erhalten einer Ausgabedatei, wobei die Ausgabedatei Daten einschließt, die Benutzerschnittstellen(Ul)-Elemente definieren und eine Animationsdatei umfasst;
Extrahieren einer oder mehrerer UI-Layoutdateien und assoziierter Animationen aus der Ausgabedatei, wobei die assoziierten Animationen Animationsattribute für die UI-Elemente in einem Zustand definieren, der mit einem durch die eine oder mehreren UI-Layoutdateien definierten Layout assoziiert ist;
Kodieren einer Reihe von UI-Assets mit Zustand-zu-Zustand-Übergängen durch einen Prozessor (102), so dass die Reihe von Ul-Assets manipuliert und ausgeführt werden kann, um kodiertes Verhalten und Darstellung aufzuweisen, wobei das Kodieren auf der Grundlage der erhaltenen UI-Elemente, der UI-Layout-Dateien und der assoziierten Animationen durchgeführt wird; und
wenn die Ausgabedatei Markierungsinformationen umfasst, die dem Zustand entsprechen, der mit dem Layout assoziiert ist, wobei die Markierungsinformationen eine Startzeit und eine Dauer umfassen, um automatisch einen Verhaltenszustand an die assoziierten Animationen zu binden.

2. Das computerimplementierte Verfahren nach Anspruch 1, wobei die Ausgabedatei von einer visuellen Grafikplattform (11) erhalten wird und eines oder mehrere der UI-Elemente UI-Steuerelemente umfassen, wobei das Verfahren weiter umfasst:
Kategorisieren der UI-Steuerungen in darstellungsbezogene UI-Steuerungen und verhaltensbezogene UI-Steuerungen.

3. Das computerimplementierte Verfahren nach Anspruch 1, wobei die Ausgabedatei Daten (123) einschließt, die die in einem animierten Arbeitsablauf organisierten UI-Elemente definieren und die Interaktion mit den UI-Elementen illustrieren.

4. Das computerimplementierte Verfahren nach Anspruch 1, wobei die Zustand-zu-Zustand-Übergänge Positionsdaten oder Animationsdaten umfassen.

5. Das computerimplementierte Verfahren nach Anspruch 1, wobei die assoziierten Animationen in zeitbasierten Animationsdateien oder Einzelbildbasierten Animationsdateien bereitgestellt werden.

6. Das computerimplementierte Verfahren nach Anspruch 1, wobei die Reihe von ausführbaren UI-Assets in Verbindung mit einem Benutzeroberflächen-Design-Arbeitsablauf manipulierbar sind, während sie von einem Rendering-Hilfsprogramm (12) ausgeführt werden können.

7. Das computerimplementierte Verfahren nach Anspruch 1 weiter umfassend: Erzeugen von auf den erhaltenen UI-Elementen basierenden Zeitleisteninformationen.

8. Das computerimplementierte Verfahren nach Anspruch 7, wobei das Erzeugen von Zeitleisteninformationen weiter auf einer oder mehreren UI-Layoutdateien und den assoziierten Animationen basiert.

9. Das computerimplementierte Verfahren nach Anspruch 1 weiter umfassend:
Analysieren der Ausgabedatei und Identifizieren von Komponenten, die UI-Steuerungen darstellen; und
Trennen von Präsentationsdaten für die UI-Steuerelemente von Verhaltensdaten für die UI-Steuerelemente, wobei die Präsentationsdaten und die Verhaltensdaten aus der einen oder den mehreren UI-Layoutdateien erhalten werden.

10. Das computerimplementierte Verfahren nach Anspruch 9 weiter für eine verhaltensbezogene UI-Steuerung unter den UI-Steuerungen umfassend: Hinzufügen eines Verhaltensklassennamens zu der verhaltensbezogenen UI-Steuerung, um die Präsentationsdaten mit den Verhaltensdaten zu verbinden.

11. Das computerimplementierte Verfahren nach Anspruch 9, wobei die Reihe von ausführbaren Ul-Assets ausführbaren Code umfasst, der die Präsentationsdaten von den Verhaltensdaten trennt, so dass das Verhalten der UI-Steuerung durch eine Änderung der Präsentationsdaten für die UI-Steuerung nicht beeinflusst wird.

12. Ein nicht-flüchtiges, maschinenlesbares Medium, das Anweisungen und Instruktionen zur Ausführung durch einen Prozessor (102) speichert, um ein computerimplementiertes Verfahren durchzuführen, umfassend
Erhalten einer Ausgabedatei, wobei die Ausgabedatei Daten einschließt, die Benutzerschnittstellen(Ul)-Elemente definieren, und eine Animationsdatei umfasst;
Extrahieren einer oder mehrerer UI-Layoutdateien und assoziierter Animationen aus der Ausgabedatei, wobei die assoziierten Animationen Animationsattribute für die UI-Elemente in einem Zustand definieren, der mit einem durch die eine oder mehreren UI-Layoutdateien definierten Layout assoziiert ist;
Kodieren einer Reihe von UI-Assets mit Zustand-zu-Zustand-Übergängen durch einen Prozessor (102), so dass die Reihe von Ul-Assets manipuliert und ausgeführt werden kann, um kodiertes Verhalten und kodierte Darstellung aufzuweisen, wobei das Kodieren auf der Grundlage der erhaltenen UI-Elemente, der UI-Layout-Dateien und der assoziierten Animationen durchgeführt wird; und
wenn die Ausgabedatei Markierungsinformationen umfasst, die dem Zustand entsprechen, der mit dem Layout assoziiert ist, wobei die Markierungsinformationen eine Startzeit und eine Dauer umfassen, um automatisch einen Verhaltenszustand an die assoziierten Animationen basierend auf den Markierungsinformationen zu binden.

13. Ein Computersystem für die rationalisierte Entwicklung einer Benutzerschnittstelle, UI, wobei das System Folgendes umfasst:
einen oder mehrere Prozessoren (102), die ein oder mehrere Computerprogramme ausführen, die konfiguriert sind, zum:
Erhalten einer Ausgabedatei, wobei die Ausgabedatei Daten einschließt, die Benutzerschnittstellen(Ul)-Elemente definieren und eine Animationsdatei umfasst;
Extrahieren einer oder mehrerer UI-Layoutdateien und assoziierter Animationen aus der Ausgabedatei, wobei die assoziierten Animationen Animationsattribute für die UI-Elemente in einem Zustand definieren, der mit einem durch die eine oder mehrere UI-Layoutdateien definierten Layout assoziiert ist;
Kodieren einer Reihe von UI-Assets mit Zustand-zu-Zustand-Übergängen durch einen Prozessor (102), so dass die Reihe von Ul-Assets manipuliert und ausgeführt werden kann, um ein kodiertes Verhalten und eine kodierte Darstellung aufzuweisen, wobei das Kodieren auf der Grundlage der erhaltenen UI-Elemente, der UI-Layout-Dateien und der assoziierten Animationen durchgeführt wird; und
wobei die Ausgabedatei Markierungsinformationen umfasst, die dem Zustand entsprechen, der mit dem Layout assoziiert ist, wobei die Markierungsinformationen eine Startzeit und eine Dauer umfassen, um automatisch einen Verhaltenszustand an die Animation basierend auf den Markierungsinformationen zu binden.

## Revendications

1. Procédé mis en œuvre par ordinateur comprenant :
l'obtention d'un fichier de sortie, le fichier de sortie comprenant des données définissant des éléments d'interface utilisateur, Ul, et comprenant un fichier d'animation ;
l'extraction, à partir du fichier de sortie, d'un ou plusieurs fichiers de disposition d'Ul et des animations associées, les animations associées définissant des attributs d'animation pour les éléments d'Ul dans un état associé à une disposition définie par les un ou plusieurs fichiers de disposition d'Ul ;
le codage, par un processeur (102), d'une série d'actifs d'UI avec des transitions d'état à état de sorte que la série d'actifs d'Ul peut être manipulée et exécutée pour présenter un comportement et une présentation codés, le codage étant réalisé sur la base des éléments d'UI obtenus, des fichiers de disposition d'Ul et des animations associées ; et
lorsque le fichier de sortie comprend des informations de marqueur correspondant à l'état associé à la disposition, les informations de marqueur comprenant un temps de début et une durée pour lier automatiquement un état de comportement aux animations associées.

2. Procédé mis en œuvre par ordinateur selon la revendication 1, dans lequel le fichier de sortie est obtenu à partir d'une plate-forme (11) graphique visuelle et un ou plusieurs des éléments d'Ul comprennent des commandes d'UI, le procédé comprenant en outre :
la catégorisation des commandes d'UI en commandes d'UI liées à la présentation et en commandes d'UI liées au comportement.

3. Procédé mis en œuvre par ordinateur selon la revendication 1, dans lequel le fichier de sortie comprend des données (123) définissant les éléments d'UI organisés dans un flux de travail animé et illustrant l'interaction avec les éléments d'Ul.

4. Procédé mis en œuvre par ordinateur selon la revendication 1, dans lequel les transitions d'état à état comprennent des données de position ou des données d'animation.

5. Procédé mis en œuvre par ordinateur selon la revendication 1, dans lequel les animations associées sont fournies dans des fichiers d'animation basés sur le temps ou des fichiers d'animation basés sur des images.

6. Procédé mis en œuvre par ordinateur selon la revendication 1, dans lequel la série d'actifs d'UI exécutables sont manipulables en relation avec un flux de travail de conception d'interface utilisateur tout en étant exécutables par un utilitaire de rendu (12).

7. Procédé mis en œuvre par ordinateur selon la revendication 1, comprenant en outre :
la génération d'informations de chronologie sur la base des éléments d'UI obtenus.

8. Procédé mis en œuvre par ordinateur selon la revendication 7, dans lequel la génération d'informations de chronologie est en outre basée sur les un ou plusieurs fichiers de disposition d'Ul et les animations associées.

9. Procédé mis en œuvre par ordinateur selon la revendication 1, comprenant en outre :
l'analyse du fichier de sortie et l'identification des composants qui constituent les commandes d'Ul ; et
la séparation des données de présentation pour les commandes d'UI des données de comportement pour les commandes d'Ul, les données de présentation et les données de comportement étant obtenues à partir des un ou plusieurs fichiers de disposition d'Ul.

10. Procédé mis en œuvre par ordinateur selon la revendication 9, comprenant en outre, pour une commande d'Ul liée au comportement parmi les commandes d'Ul :
l'ajout d'un nom de classe de comportement à la commande d'Ul liée au comportement pour lier les données de présentation aux données de comportement.

11. Procédé mis en œuvre par ordinateur selon la revendication 9, dans lequel la série d'actifs d'UI exécutables comprend un code exécutable séparant les données de présentation des données de comportement de sorte que le comportement de la commande d'Ul n'est pas affecté par la modification des données de présentation pour la commande d'UI.

12. Support non transitoire lisible par machine stockant des déclarations et des instructions à des fins d'exécution par un processeur (102) pour réaliser un procédé mis en œuvre par ordinateur comprenant :
l'obtention d'un fichier de sortie, le fichier de sortie comprenant des données définissant des éléments d'interface utilisateur, Ul, et comprenant un fichier d'animation ;
l'extraction, à partir du fichier de sortie, d'un ou plusieurs fichiers de disposition d'Ul et des animations associées, les animations associées définissant des attributs d'animation pour les éléments d'Ul dans un état associé à une disposition définie par les un ou plusieurs fichiers de disposition d'Ul ;
le codage, par un processeur (102), d'une série d'actifs d'UI avec des transitions d'état à état de sorte que la série d'actifs d'Ul peut être manipulée et exécutée pour présenter un comportement et une présentation codés, le codage étant réalisé sur la base des éléments d'UI obtenus, des fichiers de disposition d'Ul et des animations associées ; et
lorsque le fichier de sortie comprend des informations de marqueur correspondant à l'état associé à la disposition, les informations de marqueur comprenant un temps de début et une durée pour lier automatiquement un état de comportement aux animations associées sur la base des informations de marqueur.

13. Système informatique pour le développement d'une interface utilisateur, UI, rationalisée, le système comprenant :
un ou plusieurs processeurs (102), exécutant un ou plusieurs programmes informatiques, configurés pour :
obtenir un fichier de sortie, le fichier de sortie comprenant des données définissant des éléments d'interface utilisateur, Ul, et comprenant un fichier d'animation ;
extraire, à partir du fichier de sortie, un ou plusieurs fichiers de disposition d'Ul et des animations associées, les animations associées définissant des attributs d'animation pour les éléments d'Ul dans un état associé à une disposition définie par les un ou plusieurs fichiers de disposition d'Ul ;
coder, par un processeur (102), une série d'actifs d'Ul avec des transitions d'état à état de sorte que la série d'actifs d'Ul peut être manipulée et exécutée pour présenter un comportement et une présentation codés, le codage étant réalisé sur la base des éléments d'UI obtenus, des fichiers de disposition d'Ul et des animations associées ; et
lorsque le fichier de sortie comprend des informations de marqueur correspondant à l'état associé à la disposition, les informations de marqueur comprenant un temps de début et une durée pour lier automatiquement un état de comportement à l'animation sur la base des informations de marqueur.
